# EUROPÄISCHE PATENTSCHRIFT

(11) **EP 2 914 108 B1**
(45) Veröffentlichungstag und Bekanntmachung des Hinweises auf die Patenterteilung: **01.11.2017**
(21) Anmeldenummer: 13791928.8
(22) Anmeldetag: 01.11.2013
(51) Int. Cl.: A01N 25/30, A01N 57/20, A01N 39/04, A01P 13/00, A01N 37/40, A01N 41/06

(54) **WÄSSRIGE ADJUVANT-ZUSAMMENSETZUNGEN**
AQUEOUS ADJUVANT COMPOSITIONS
COMPOSITIONS AQUEUSES ADJUVANTES

(30) Priorität: 03.11.2012 DE 102012021647
(43) Veröffentlichungstag der Anmeldung: 09.09.2015
(73) Patentinhaber: Clariant International Ltd, 4132 Muttenz (CH)
(72) Erfinder: WACKER, Andreas, 68163 Mannheim (DE)
(74) Vertreter: Mikulecky, Klaus
(86) Internationale Anmeldenummer: PCT/EP2013/003290
(87) Internationale Veröffentlichungsnummer: WO 2014/067663

(56) Entgegenhaltungen:
- EP-A1- 0 378 985
- EP-B1- 1 379 129
- WO-A1-94/19941
- WO-A1-96/16540
- WO-A1-2012/116939
- WO-A2-96/28023
- "Product Specification: N-Octanoyl-N-methylglucamine", , 29. Juni 2000 (2000-06-29), Seiten 1-1, XP055098500, Gefunden im Internet: URL:http://www.sigmaaldrich.com/Graphics/C OfAInfo/SigmaSAPQM/SPEC/O3/O3129/O3129-BUL K________SIGMA____.pdf [gefunden am 2014-01-27]
- R. MOHAMMADI ET AL: "Effect of Surfactants on Wetting of Super-Hydrophobic Surfaces", LANGMUIR, Bd. 20, Nr. 22, 1. Oktober 2004 (2004-10-01), Seiten 9657-9662, XP055098502, ISSN: 0743-7463, DOI: 10.1021/la049268k
- E SODERLIND ET AL: "The usefulness of sugar surfactants as solubilizing agents in parenteral formulations", INTERNATIONAL JOURNAL OF PHARMACEUTICS, Bd. 252, Nr. 1-2, 1. Februar 2003 (2003-02-01), Seiten 61-71, XP055098505, ISSN: 0378-5173, DOI: 10.1016/S0378-5173(02)00599-9
- WALTER A ET AL: "Solubility properties of the alkylmethylglucamide surfactants", BIOCHIMICA ET BIOPHYSICA ACTA (BBA) - BIOMEMBRANES, ELSEVIER, AMSTERDAM, NL, Bd. 1029, Nr. 1, 2. November 1990 (1990-11-02), Seiten 67-74, XP023354648, ISSN: 0005-2736, DOI: 10.1016/0005-2736(90)90437-S [gefunden am 1990-11-02]
- Joel T Smith ET AL: "Micellar Electrokinetic Capillary Chromatography with in Situ Charged Micelles. 1. Evaluation of N-D-Gluco-N-methylalkanamide Surfactants as Anionic Borate Complexes", Analytical Chemistry, 1. April 1994 (1994-04-01), Seiten 1119-1133, XP055098614, Gefunden im Internet: URL:http://pubs.acs.org/doi/pdf/10.1021/ac 00079a030 [gefunden am 2014-01-27]
- Tony Tegeler ET AL: "SPECIAL GUEST EDITOR SECTION Electrically Driven Microseparation Methods for Pesticides and Metabolites: I. Micellar Electrokinetic Capillary Chromatography of Carbamate Insecticides with MEGA-Borate and SDS Surfactants", JOURNAL OF AOAC INTERNATIONAL, 1. Juni 1999 (1999-06-01), Seiten 1542-1549, XP055098617, Gefunden im Internet: URL:http://lib3.dss.go.th/fulltext/Journal /J.AOAC 1999-2003/J.AOAC1999/v82n6(nov-dec)/v82n6p 1542.pdf [gefunden am 2014-01-27]

## Beschreibung

Die Erfindung betrifft wässrige Adjuvant-Zusammensetzungen, die Alkylglucamide enthalten, deren Verwendung zum Herstellen von wässrigen Pestizid-Zusammensetzungen sowie wässrige Pestizid-Zusammensetzungen enthaltend Alkylglucamide.

Pestizide (vor allem Fungizide, Herbizide und Insektizide) sind chemische Substanzen synthetisch hergestellt oder natürlichen Ursprungs, die in Pflanzenzellen, -gewebe oder in parasitäre Organismen in oder auf der Pflanze eindringen und diese schädigen und/oder zerstören. Den größten Anteil an Pestiziden stellen Herbizide dar. Pestizide werden üblicherweise in Form von flüssigen oder festen konzentrierten Zubereitungen (Formulierungen) in der Landwirtschaft eingesetzt. Diese erleichtern dem Anwender so die Handhabung oder sorgen für eine höhere Wirksamkeit des Wirkstoffs. Die Formulierungen werden üblicherweise vor dem Einsatz mit Wasser verdünnt und anschließend durch Sprühapplikation ausgebracht.

Wasserlösliche Konzentrate (Soluble Liquids, abgekürzt mit SL) sind eine besonders wichtige Form der Pestizidzubereitungen. Sie spielen insbesondere bei Herbiziden eine große Rolle, wobei die Pestizide oftmals als wasserlösliche Salze, die durch Neutralisation der Säureform der Herbizide mit geeigneten Basen in ihre Alkali- oder Ammoniumsalze überführt werden, eingesetzt werden.

Eine besonders wichtige Rolle spielen die wasserlöslichen Salze von Herbiziden, wie beispielsweise des Glyphosats, Glufosinats oder der Auxin-Herbizide wie 2,4-D oder Dicamba. Sie werden vorzugsweise als Alkalimetallsalz oder in Form verschiedener Ammoniumsalze bzw. als Gemisch dieser Salze meistens als wässrige Formulierungen verwendet.

Ein generelles Problem bei der Anwendung von Pestiziden ist, dass nur ein Bruchteil des Wirkstoffes die gewünschte Aktivität entfaltet. Der größere Teil geht oft ungenutzt verloren, indem der Wirkstoff bei der Ausbringung der Spritzbrühe nicht die Blätter oder die Wurzeln der Pflanze erreicht, sondern ungenutzt im Boden versickert, durch Regen abgewaschen oder von der Pflanze einfach nicht richtig aufgenommen wird.

Dieser ökologische und ökonomische Nachteil kann durch Zugabe von Hilfsstoffen, im Rahmen der vorliegenden Anmeldung als "Adjuvants" bezeichnet, zu Pestizid-Formulierungen reduziert werden. Diese Hilfsstoffe können beispielsweise den Spray-Drift reduzieren, die Benetzung der Pflanze verbessern oder dafür sorgen, dass der Wirkstoff länger auf der Pflanzenoberfläche haftet bzw. besser aufgenommen wird. Insbesondere bei wasserlöslichen Pestiziden, wie beispielsweise bei Glyphosat haben die Art sowie die Menge der verwendeten Adjuvants einen entscheidenden Einfluss auf die Wirksamkeit der Formulierung.

Die mit Abstand am häufigsten verwendeten Adjuvants in wässrigen Herbizid-Formulierungen sind Fettaminethoxylate, hauptsächlich Talgfettaminethoxylate. Diese Produkte sind jedoch aufgrund ihrer toxischen und ökotoxikologischen Eigenschaften, wie der starken Augenreizung oder der Toxizität gegenüber aquatischen Organismen als bedenklich einzustufen und werden zunehmend durch Adjuvants mit einem besseren toxikologischen und ökotoxikologischen Profil ersetzt.

Adjuvants, die in wässrigen Pestizidformulierungen eingesetzt werden, liegen üblicherweise in flüssiger Form, d. h. als wassermischbare Lösungen vor, um die Herstellung der Pestizidformulierung zu vereinfachen. Die Adjuvant-Lösungen können Wasser und/ oder wassermischbare Lösemittel enthalten, die zusammen mit dem Pestizid eine homogene und lagerstabile wässrige Formulierung ergeben. Wenn möglich wird Wasser als Lösemittel eingesetzt, da dies sowohl aus Kostenais auch aus Umweltgesichtspunkten bevorzugt ist. Gegebenenfalls werden Co-Solventien zugesetzt, die in der Lage sind, die Löslichkeit oder die Stabilität zu verbessern.

Die Verwendung von zuckerbasierenden Tensiden, wie Alkyl-N-methylglucosamiden, beispielsweise in Reinigungsmitteln und kosmetischen Produkten ist in der Literatur beschrieben (F.W. Lichtenthaler, "Carbohydrates as Organic Raw Materials" in Ullmann's Ullmann's Encyclopedia of Industrial Chemistry, Wiley-VCH Verlag, 2010).

WO 96/16540 beschreibt Pestizidzusammensetzungen, die langkettige Alkylamide, die einen Polyhydroxycarbonyl-Substituenten mit mindestens drei Hydroxyl-Gruppen am Amidstickstoff tragen. In den Beispielen werden Emulsionskonzentrate, wasserdispergierbare Pulver und Granulate von Dodecyl-N-methylglucamid, Dodecyltetradecyl-N-methylglucamid und Cetylstearyl-N-methylglucamid beschrieben.

WO 94/19941 A1 offenbart eine wässrige Zusammensetzung enthaltend 270 g/l Glyphosat sowie ein Talgfettaminethoxylat mit 15 mol EO (Genamin T150) als Adjuvant.

EP 0 378 985 A1 offenbart eine wässrige Zusammensetzung enthaltend Glyphosat-Ammoniumsalz und ein Talgfettaminethoxylat mit 15 mol EO (Genamin T150) als Adjuvant.

WO 2012/116939 A1 offenbart, dass beim Lagern einer wässrigen Lösung von Glyphosat-Isopropylaminsalz (480 g/l) mit Genamin T150 (300 g/l) für vier Wochen bei -5 °C bzw. bei 55 °C eine Phasentrennung auftritt.

EP 1 379 129 B1 offenbart die Verwendung von Copolymeren erhältlich durch Copolymerisation von Glycerin, mindestens einer Dicarbonsäure (z.B. Phthalsäure) und einer Monocarbonsäure (z.B. Kokosfettsäure) als Adjuvantien für Pestizide (Anspruch 7). Als Pestizid kommt bevorzugt Glyphosat zum Einsatz.

Die Anforderungen an Adjuvants in wässrigen Pestizid-Zusammensetzungen sind im Laufe der Jahre stetig angewachsen. Neben hoher biologischer Wirksamkeit und Unbedenklichkeit, sowohl aus Sicht des Anwenders als auch unter Umweltgesichtspunkten, werden zunehmend vorteilhaftere anwendungstechnische Eigenschaften gefordert. Die Adjuvants sollen eine möglichst hohe Beladung der Formulierung mit dem Wirkstoff ermöglichen und möglichst mit verschiedenen Wirkstoffen kompatibel sein. Die Formulierungen müssen lagerstabil sein und eine möglichst niedrige Viskosität aufweisen, um eine leichtere Handhabung zu gewährleisten, sowie die möglichst vollständige Entleerung der Gebinde erleichtern. Außerdem ist eine gute Mischbarkeit und schnelles Lösevermögen, auch und besonders in kaltem Wasser, beim Ansetzen der Spritzbrühe gefordert.

Es stellte sich somit die Aufgabe, neue wässrige Adjuvant-Zusammensetzungen zur Verfügung zu stellen, die hochwirksam sind, die sich durch ein sehr vorteilhaftes toxikologisches und ökologisches Profil auszeichnen und die aus anwendungstechnischer Sicht vorteilhafte Eigenschaften aufweisen.

Überraschend wird die Aufgabe gelöst durch neue wässrige Adjuvant-Zusammensetzungen enthaltend
a) ein Gemisch aus Octanoyl-N-methylglucamid und Decanoyl-N-methylglucamid der Formel (I) 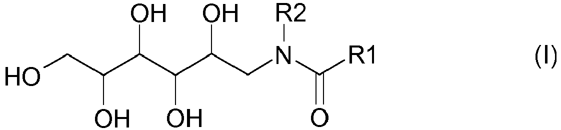 worin
   R1 für C₇-Alkyl und C₉-Alkyl steht
   R2 für eine Methylgruppe steht,
   wobei der Anteil an Octanoyl-N-methylglucamid 10 bis 90 Gew.-% und der Anteil an Decanoyl-N-methylglucamid 10 bis 90 Gew.-%, bezogen auf die Gesamtmenge der in diesem Gemisch enthaltenen Alkylglucamide, beträgt
b) Wasser, und
c) optional ein Co-Solvens.

Weiterhin Gegenstand der Erfindung ist die Verwendung einer Adjuvant-Zusammensetzung enthaltend
a) ein oder mehrere Alkylglucamide der Formel (I) 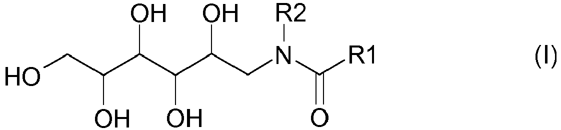 worin
   R1 für eine lineare oder verzweigte Alkylgruppe mit 5 bis 9 Kohlenstoffatomen steht,
   R2 für eine Alkylgruppe mit 1 bis 3 Kohlenstoffatomen steht,
b) Wasser, und
c) optional ein Co-Solvens,
   zur Steigerung der biologischen Aktivität von Pestiziden ausgewählt aus der Gruppe der Herbizide, Fungizide, Akarizide, Bakterizide, Molluskizide, Nematizide und Rodentizide, vorzugsweise von Herbiziden.

Ebenfalls Gegenstand der Anmeldung in die Verwendung einer Adjuvant-Zusammensetzung enthaltend
a) ein oder mehrere Alkylglucamide der Formel (I) 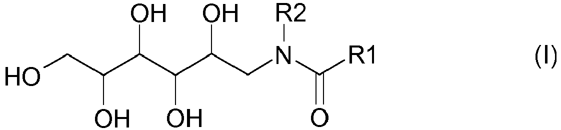 worin
   R1 für eine lineare oder verzweigte Alkylgruppe mit 5 bis 9 Kohlenstoffatomen steht,
   R2 für eine Alkylgruppe mit 1 bis 3 Kohlenstoffatomen steht,
b) Wasser, und
c) optional ein Co-Solvens,
zur Herstellung einer wässrigen Pestizidzusammensetzung.

In dem einen oder den mehreren der erfindungsgemäß verwendeten Alkylglucamide der Formel (I) steht der Rest R1 vorzugsweise für eine lineare oder verzweigte Alkylgruppe mit 7 bis 9 Kohlenstoffatomen. Der Rest R2 steht bevorzugt für eine Methylgruppe.

Besonders bevorzugt enthalten die erfindungsgemäß verwendeten Adjuvant-Zusammensetzungen ein Gemisch aus Octanoyl-N-methylglucamid (R1 = C₇-Alkyl, R2 = Methyl) und Decanoyl-N-methylglucamid (R1 = C₉-Alkyl, R2 = Methyl). Der Anteil an Octanoyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide. Der Anteil an Decanoyl-N-methylglucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide.

Der Pentahydroxyhexylrest in den Alkylglucamiden der Formel (I) verfügt über verschiedene chirale Zentren, so dass jeweils mehrere Stereoisomere existieren können. Üblicherweise werden die Alkylglucamide der Formel (I) aus natürlich vorkommenden Zuckern, wie der D-Glucose hergestellt, grundsätzlich ist aber auch die Verwendung anderer natürlicher oder synthetischer Hexosen oder anderer C₆-Bausteine möglich, so dass unterschiedliche Stereoisomere der Formel (I) resultieren können.

Das optional enthaltene Co-Solvens c) kann entweder als Nebenkomponente aus dem Herstellungsprozess des Alkylglucamids zugegen sein oder nachträglich zur Adjuvant-Zusammensetzung zugegeben worden sein. Bei dem Co-Solvens kann es sich um ein einziges Lösemittel oder ein Gemisch zweier oder mehrerer Lösemittel handeln. Dazu eignen sich alle polaren Lösemittel, die mit der wässrigen Pestizidzusammensetzung kompatibel sind und eine homogene Phase bilden. Geeignete Co-Solventien sind beispielsweise einwertige Alkohole, wie Methanol, Ethanol, Propanole, Butanole, Benzylalkohol oder mehrwertige Alkohole wie Ethylenglykol, Diethylenglykol, Propylenglykol oder Glycerin oder Polyglykole wie Polyethylen-, Polypropylen- oder gemischte Polyalkylenglykole (PAGs). Weitere geeignete Lösemittel sind Ether wie beispielsweise Propylenglykolmonooder dimethylether, Dipropylenglykolmono- oder dimethylether, Amide wie beispielsweise N-Methyl- oder N-Ethylpyrrolidon, Milchsäure-, Capryl- oder Decansäuredimethylamid.

Besonders geeignete Co-Solventien sind ein oder mehrwertige Alkohole und insbesondere geeignet sind zwei- oder dreiwertige Alkohole wie Propylenglykol, Glycerin oder Polyethylen-, Polypropylen- bzw. gemischte Polyalkylenglykole (PAGs).

Der Anteil des Co-Solvens in der Zusammensetzung beträgt üblicherweise 10 bis 250 g/l, bevorzugt 20 bis 200 g/l und besonders bevorzugt 30 bis 150 g/l.

Das Co-Solvens kann zusätzlich zur Stabilisierung der Adjuvant-Zusammensetzungen beitragen, indem es beispielsweise die Kälte- oder Wärmestabilität erhöht oder weitere anwendungstechnische Eigenschaften wie die Viskosität positiv beeinflusst.

Die Alkylglucamide der Formel (I) basieren bevorzugt auf nachwachsenden Rohstoffen und zeichnen sich durch ein vorteilhaftes toxikologisches und ökologisches Profil aus. Sie besitzen eine hohe Löslichkeit in Wasser.

Bevorzugt enthalten die wässrigen Adjuvant-Zusammensetzungen 10 bis 90 Gew.-%, besonders bevorzugt 20 bis 80 Gew.-% und insbesondere bevorzugt 30 bis 70 Gew.-% des einen oder der mehreren Alkylglucamide der Komponente a).

Die wässrigen Adjuvant-Zusammensetzungen der Alkylglucamide der Formel (I) eignen sich als Adjuvants in wässrigen Pestizidzusammensetzungen zur Verbesserung der biologischen Aktivität von Herbiziden, Fungiziden, Akariziden, Bakteriziden, Molluskiden, Nematiziden und Rodentiziden.

Die wässrigen Adjuvant-Zusammensetzungen eignen sich hervorragend zur Herstellung von lagerstabilen wässrigen Pestizid-Zusammensetzungen, die vorteilhafte Eigenschaften besitzen.

Übliche Verfahren zur Herstellung solcher Pestizid-Zusammensetzungen sind dem Fachmann bekannt.

Weiterer Gegenstand der Erfindung sind weiterhin auch wässrige Pestizid-Zusammensetzungen enthaltend
a) ein oder mehrere Alkylglucamide der Formel (I) 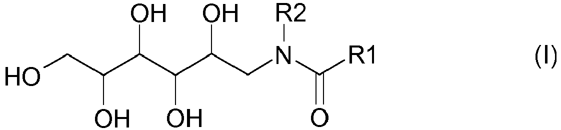 worin
   R1 für eine lineare oder verzweigte Alkylgruppe mit 5 bis 9 Kohlenstoffatomen steht,
   R2 für eine Alkylgruppe mit 1 bis 3 Kohlenstoffatomen steht,
b) Wasser
c) optional ein Co-Solvens,
d) ein oder mehrere wasserlösliche Pestizide.

Unter wasserlöslichen Pestiziden im Sinne der Erfindung sind Pestizide zu verstehen, die bei Raumtemperatur (25 °C) eine Löslichkeit von mehr 50 g/l und vorzugsweise mehr als 100 g/l in Wasser aufweisen.

Bevorzugte wasserlösliche Pestizide sind die wasserlösliche Herbizide und unter diesen sind wiederum die wasserlöslichen Salze von Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glufosinat, Glyphosat, Imizameth, Imazamethabenz, Imazamox, Imazapic, Imazapyr, Imazaquin, Imazethapyr, MCPA, MCPB, Mecoprop, Octansäure, Paraquat, Pelargonsäure, Picloram, Quizalofop, 2,3,6-TBA und Triclopyr bevorzugt. Die genaue chemische Zusammensetzung und Struktur all dieser Verbindungen sind bekannt und im Internet nachzusehen unter: http://www.alanwood.net/pesticides/index_cn_frame.html

Besonders bevorzugt sind die wasserlöslichen Salze von 2,4-D, Bentazon, Dicamba, Fomesafen, Glyphosat, Glufosinat, MCPA und Paraquat. Außerordentlich bevorzugt sind die wasserlöslichen Salze von Glyphosat.

Unter den wasserlöslichen Salzen sind insbesondere die Alkali- und Ammoniumsalze und unter diesen wiederum die Kalium-, Ammonium-, Dimethylammonium-, iso-Propylammonium- und die (2-Hydroxyethyl)trimethylammoniumsalze bevorzugt.

Bei den wasserlöslichen Pestiziden der Komponente d) kann es sich auch um eine Kombination von zwei oder von mehreren Pestiziden handeln. Solche Kombinationen sind insbesondere dann von Bedeutung, wenn es beispielsweise darum geht, das Wirkungsspektrum der Pestizid-Zusammensetzung zu verbreitern oder Resistenzen gegenüber bestimmte Pestizide besser zu unterbinden.

Die Kombination von zwei oder mehreren wasserlöslichen Pestiziden in einer Formulierung ist aber ein schwieriges Unterfangen. Die Wirkstoffe sind nämlich üblicherweise nicht miteinander kompatibel und die wässrigen Mischungen daher nicht phasenstabil. Die Alkylglucamide der Formel (I) eignen sich aber völlig überraschend gut dazu, um solche grundsätzlich inkompatiblen Zusammensetzungen zu stabilisieren, was bislang noch nicht bekannt war.

In einer weiteren Ausführungsform der Erfindung enthalten die erfindungsgemäßen Pestizid-Zusammensetzungen daher mindestens zwei wasserlösliche Pestizide der Komponente d).

Bevorzugt sind die mindestens zwei wasserlöslichen Pestizide ausgewählt aus Glyphosat, Glufosinat, 2,4-D, Dicamba und Fomesafen.

Besonders bevorzugte Zusammensetzungen sind dabei solche, bei denen es sich bei den wasserlöslichen Pestiziden der Komponente d) um die Kombinationen der zwei Herbizide Glyphosat und 2,4-D, Glyphosat und Dicamba, Glyphosat und Fomesafen, Glyfosat und Glufosinat, 2,4-D und Dicamba, Glufosinat und 2,4-D sowie Glufosinat und Dicamba handelt.

Die Herstellung der Alkylglucamide der Formel (I) ist hinlänglich vorbeschrieben und dem Fachmann bekannt. Sie erfolgt beispielsweise durch Kondensation von Carbonsäureestern mit einem sekundären N-Alkylglucamin, welches seinerseits durch reduktive Aminierung aus einem Zucker wie D-Glucose hergestellt werden kann.

Mit den oben beschriebenen Alkylglucamiden der Formel (I) lassen sich erfindungsgemäße Pestizid-Zusammensetzungen, insbesondere wässrige Herbizid-Formulierungen, mit ausgezeichneten anwendungstechnischen Eigenschaften herstellen.

Bei der Formulierung von wässrigen Pestizid-Zusammensetzungen ist man bestrebt, die Zusammensetzung mit einer möglichst hohen Konzentration an Wirkstoff zu beladen. Das reduziert Verpackungs-, Transport-, Lager- und Entsorgungskosten. Daher sollte eine Adjuvant-Zusammensetzung in der Lage sein, stabile hochbeladene Pestizid-Zusammensetzungen, sogenannte "High-Load-Formulierungen", zu ermöglichen. Dies gelingt mit den Alkylglucamiden der Formel (I) überraschend gut.

In einer bevorzugten Ausführungsform der Erfindung beträgt die Menge des einen oder der mehreren wasserlöslichen Pestizide der Komponente d) in den erfindungsgemäßen Zusammensetzungen mehr als 100 g/l, bevorzugt mehr als 200 g/l und besonders bevorzugt mehr als 300 g/l. Diese Mengenangaben beziehen sich auf das Gesamtgewicht der erfindungsgemäßen Pestizid-Zusammensetzung und im Falle von Pestiziden, die in Form ihrer wasserlöslichen Salze eingesetzt werden (wie üblicherweise beispielsweise Glyphosat oder 2,4-D), auf die Menge an freier Säure, dem sogenannten Säureäquivalent ("acid equivalent", a.e.).

In einer weiteren bevorzugten Ausführungsform der Erfindung beträgt die Menge des einen oder der mehreren Alkylglucamide der Formel (I) in den erfindungsgemäßen Pestizid-Zusammensetzungen 20 bis 250 g/l, bevorzugt 40 bis 200 g/l und besonders bevorzugt 50 bis 150 g/l. Diese Mengenangaben beziehen sich auf die gesamte Menge der erfindungsgemäßen Pestizid-Zusammensetzung.

Üblicherweise werden die Alkylglucamide der Formel (I) in Form von Lösungen eingesetzt. Zur Klarstellung sei hier erwähnt, dass sich die oben genannten Mengenangaben dabei auf den Aktivgehalt der Alkylglucamide der Formel (I) in der Lösung beziehen.

Ein besonders wichtiges Kriterium für die Lagerstabilität von wässrigen Pestizid-Zusammensetzungen wie beispielsweise Glyphosat- und 2,4-D-Formulierungen, ist die Phasenstabilität. Eine Zusammensetzung wird dann als ausreichend phasenstabil angesehen, wenn sie über einen weiten Temperaturbereich homogen bleibt und wenn es nicht zur Ausbildung von zwei oder mehreren getrennten Phasen oder zu Ausfällungen (Bildung einer weiteren festen Phase) kommt. Phasenstabilität ist sowohl bei erhöhter Temperatur, wie sie beispielsweise bei der Lagerung in der Sonne oder in warmen Ländern auftreten kann, als auch bei niedriger Temperatur, wie beispielsweise im Winter oder in kalten klimatischen Regionen, die entscheidende Voraussetzung für eine lagerstabile Formulierung.

Die erfindungsgemäßen Pestizid-Zusammensetzungen zeichnen sich dadurch aus, dass sie auch bei einer Temperatur von vorzugsweise größer 55 °C, besonders bevorzugt von größer 70 °C und insbesondere bevorzugt von größer 80 °C phasenstabil sind.

Außerdem zeichnen sich die erfindungsgemäßen Pestizid-Zusammensetzungen dadurch aus, dass sie auch bei einer Temperatur von vorzugsweise kleiner 10 °C, besonders bevorzugt von kleiner 0 °C und insbesondere bevorzugt von kleiner -10 °C phasenstabil sind.

Der pH-Wert der Pestizid-Zusammensetzungen liegt üblicherweise im Bereich von 3,5 bis 8,0, bevorzugt bei 4,0 bis 7,0 und besonders bevorzugt bei 4,5 bis 6,5 (gemessen als 1 Gew.-%ige wässrige Verdünnung). Der pH-Wert wird primär bestimmt durch die pH-Werte der Lösungen der wässrigen Pestizide, die als Salze schwacher Säuren vorliegen. Durch Zugabe von Säuren oder Basen kann der pH-Wert auf einen anderen Wert abweichend von dem ursprünglichen pH-Wert der Mischung eingestellt werden.

Die hohe Salzstabilität der erfindungsgemäßen Pestizid-Zusammensetzung im wässrigen Medium auch bei hoher Pestizid- und Salzkonzentration stellt einen großen anwendungstechnischen Vorteil dar. Sie ermöglicht es auch, agrochemische Salze wie beispielsweise Dünger mit in die Zusammensetzung aufzunehmen.

Pestizid-Zusammensetzungen daher ein oder mehrere agrochemische Salze, bevorzugt Ammoniumsalze.

Besonders bevorzugt enthalten die Pestizid-Zusammensetzungen Ammoniumsulfat, Ammoniumnitrat, Ammoniumphosphat, Ammoniumthiocyanat und/oder Ammoniumchlorid.

Die erfindungsgemäßen Pestizid-Zusammensetzungen können neben dem einen oder den mehreren Alkylglucamiden der Formel (I) ein oder mehrere weitere Hilfsstoffe enthalten, wobei es sich bei diesen beispielsweise um Konservierungsmittel, Tenside, Entschäumer, funktionelle Polymere oder zusätzliche Adjuvants handeln kann.

Als Konservierungsmittel können organische Säuren und ihre Ester, beispielsweise Ascorbinsäure, Ascorbinpalmitat, Sorbat, Benzoesäure, Methyl-und Propyl-4-hydroxybenzoat, Propionate, Phenol, beispielsweise 2-Phenylphenat, 1,2-Benzisothiazolin-3-on, Formaldehyd, schwefelige Säure und deren Salze eingesetzt werden.

Bei den Tensiden kann es sich generell um alle mit der Zusammensetzung kompatiblen nichtionischen, amphoteren, kationischen oder anionische Tenside handeln.

Beispiele für nicht-ionische Tenside sind Ethoxylate und Alkoxylate von längerkettigen aliphatischen oder aromatischen Alkoholen, Fettaminethoxylate, längerkettige Etheraminalkoxylate, (gegebenenfalls ethoxylierte) Sorbitanester, Alkylpolyglycoside. Geeignete amphotere Tenside sind u.a. langkettige Alkyldimethylbetaine oder Alkyldimethylaminoxide, oder Alkyldimethylaminamidopropylaminoxide. Unter den anionischen Tensiden sind beispielsweise Ethersulfate von ethoxylierten Fettalkoholen, Umsetzungsprodukte von (gegebenenfalls ethoxylierten) langkettigen Alkoholen mit Phosphorsäurederivaten geeignet. Unter langkettig werden lineare oder verzweigte Kohlenwasserstoffketten mit mindestens 6 und maximal 22 Kohlenstoffatomen geeignet.

Als Entschäumer eignen sich Fettsäurealkylesteralkoxylate, Organopolysiloxane wie Polydimethylsiloxane und deren Gemische mit mikrofeiner, gegebenenfalls silanierter Kieselsäure; Perfluoralkylphosphonate und -phosphinate, Paraffine, Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

Bei den funktionellen Polymeren, die in der erfindungsgemäßen Pestizid-Zusammensetzung enthalten sein können, handelt es sich hochmolekulare Verbindungen synthetischen oder natürlichen Ursprungs mit einer Molmasse von größer als 10.000. Die funktionellen Polymere können beispielsweise als Anti-Drift-Agent wirken oder die Regenfestigkeit steigern.

In einer weiteren bevorzugten Ausführungsform der Erfindung enthalten die erfindungsgemäßen Pestizid-Zusammensetzungen neben dem einen oder den mehreren Alkylglucamiden der Komponente a) ein oder mehrere weitere Adjuvants, wie sie bekanntermaßen in wässrigen Pestizid-Zusammensetzungen verwendet werden können.

Bevorzugt sind dies Fettaminethoxylate, Etheraminethoxylate, Alkylbetaine oder Amidoalkylbetaine, Aminoxide oder Amidoalkylaminoxide, Alkylpolylglycoside oder Copolymere aus Glycerin, Kokosfettsäure und Phthalsaäure.

Diese Adjuvants sind aus der Literatur als Adjuvants in wässrigen Pestizid-Zusammensetzungen bekannt und beispielsweise in der WO2009/029561 beschrieben.

In einer weiteren bevorzugten Ausführungsform der Erfindung liegen die erfindungsgemäßen Pestizid-Zusammensetzungen als Konzentrat-Formulierungen vor, die vor dem Gebrauch verdünnt werden, insbesondere mit Wasser (beispielsweise "ready-to-use"-, "in-can"- oder "built-in"-Formulierungen), und enthalten das eine oder die mehreren wasserlöslichen Pestizide der Komponente d) in Mengen von 5 bis 80 Gew.-%, bevorzugt von 10 bis 70 Gew.-% und besonders bevorzugt von 20 bis 60 Gew.-% und die eine oder die mehreren Alkylglucamide der Formel (I) in Mengen von 1 bis 25 Gew.-%, bevorzugt von 2 bis 20 Gew.-% und besonders bevorzugt von 3 bis 15 Gew.-%. Diese Mengenangaben beziehen sich auf die gesamte Konzentrat-Formulierung und im Falle von Pestiziden, die in Form ihrer wasserlöslichen Salze eingesetzt werden, auf die Menge an freier Säure, dem sogenannten Säureäquivalent ("acid equivalent", a.e.).

Die erfindungsgemäßen Pestizid-Zusammensetzungen werden vorzugsweise in Form von Spritzbrühen auf die Felder ausgebracht. Dabei werden die Spritzbrühen durch Verdünnung von Konzentrat-Formulierungen mit einer definierten Menge Wasser hergestellt.

In einer weiteren bevorzugten Ausführungsform der Erfindung liegen die erfindungsgemäßen Zusammensetzungen als Spritzbrühen vor und enthalten 0,001 bis 10 Gew.-%, bevorzugt 0,02 bis 3 Gew.-% und besonders bevorzugt 0,025 bis 2 Gew.-% des einen oder der mehreren wasserlöslichen Pestizide der Komponente d) und 0,001 bis 3 Gew.-%, bevorzugt 0,005 bis 1 Gew.-% und besonders bevorzugt 0,01 bis 0,5 Gew.-% der einen oder mehreren Alkylglucamide der Formel (I). Die genannten Mengenangaben beziehen sich auf die gesamte Spritzbrühe und im Falle von Pestiziden, die in Form ihrer wasserlöslichen Salze eingesetzt werden, auf die Menge an freier Säure, dem sogenannten Säureäquivalent ("acid equivalent", a.e.).

Die Erfindung betrifft weiterhin die Verwendung der erfindungsgemäßen Pestizid-Zusammensetzungen zur Kontrolle und/oder zur Bekämpfung von Unkraut, Pilzerkrankungen oder Insektenbefall. Bevorzugt ist die Verwendung der erfindungsgemäßen Zusammensetzungen zur Kontrolle und/oder zur Bekämpfung von Unkraut.

Diese Verwendungen können vorzugsweise auch im sogenannten Tank-mix-Verfahren stattfinden. Hierbei können also das oder die mehreren wasserlöslichen Pestizide der Komponente d) und die eine oder die mehreren Alkylglucamide der Formel (I) sowie das Wasser auch in Form einer sogenannten "Tank-mix"-Zubereitung vorliegen. In einer derartigen Zubereitung liegen sowohl das oder die mehreren wasserlöslichen Pestizide als auch die eine oder die mehreren Alkylglucamide der Formel (I), letztere gegebenenfalls zusammen mit weiteren Adjuvants, getrennt voneinander vor. Beide Zubereitungen werden vor dem Ausbringen, in der Regel kurz vorher, miteinander vermischt, wobei eine erfindungsgemäße Pestizid-Zusammensetzung entsteht.

### Ausführungsbeispiele

Im Folgenden wird die Erfindung anhand von Beispielen für den Fachmann noch weiter verdeutlicht.

### Beispiel 1: Herstellung einer erfindungsgemäßen wässrigen Acylglucamid-Zusammensetzung

Die Herstellung des Acylglucamids erfolgte aus einem kommerziell erhältlichen C₈/C₁₀-Carbonsäuremethylester (C₈-Anteil 55 Gew.-%, C₁₀-Anteil 45 Gew.-%) durch Umsetzung mit N-Methylglucamin in Propylenglycol wie in WO 92/06073 beschrieben. Es entstand eine Mischung, die neben 90 Gew.-% des Acylglucamids der Formel (I) R1 = C₇H₁₅ bzw. C₉H₁₉, R2 = CH₃ noch 10 Gew.-% Propylenglycol aus der Reaktionsmischung enthielt. 60 g dieser Mischung wurden in 40 g Wasser gelöst. Das gab eine stabile wässrige Lösung des C8/10-Acyl-N-Methylglucamids mit einem Gehalt von 54 Gew.-% in Wasser / Propylenglykol.

### Beispiel 2: Versuch zur Herstellung einer nicht-erfindungsgemäßen wässrigen Acylglucamid-Zusammensetzung (Vergleichsbeispiel)

Die Herstellung des Acylglucamids erfolgte aus einem kommerziell erhältlichen C₁₂/C₁₄-Carbonsäuremethylester (C₁₂-Anteil 69 Gew.-%, C₁₄-Anteil 25 Gew.-%, andere Kettenbestandteile 6 Gew.-%) durch Umsetzung mit N-Methylglucamin in Propylenglycol wie in WO 92/06073 beschrieben. Es entstand eine Mischung, die neben 90 Gew.-% des Acylglucamids der Formel (I) R1 = C₁₁H₂₁ bzw. C₁₃H₂₇, R2 = CH₃ noch 10 Gew.-% Propylenglycol aus der Reaktionsmischung enthielt. Es wurde versucht, diese Mischung analog Beispiel 1 in Wasser zu lösen, jedoch wurden keine stabilen Lösungen erhalten. Die Ergebnisse sind in Tabelle 1 zusammengestellt.

### Beispiel 3: Versuch zur Herstellung einer nicht-erfindungsgemäßen wässrigen Acylglucamid-Zusammensetzung (Vergleichsbeispiel)

Die Herstellung des Acylglucamids erfolgte aus einem kommerziell erhältlichen C₁₆/C₁₈-Carbonsäuremethylester (C₁₆-Anteil 38 Gew.-%, C₁₈-Anteil 60 Gew.-%, andere Kettenbestandteile 2 Gew.-%) durch Umsetzung mit N-Methylglucamin in Propylenglycol wie in WO 92/06073 beschrieben. Es entstand eine Mischung, die neben 90 Gew.-% des Acylglucamids der Formel (I) R1 = C₁₅H₃₁ bzw. C₁₇H₃₅, R2 = CH₃ noch 10 Gew.-% Propylenglycol aus der Reaktionsmischung enthielt. Es wurde versucht, diese Mischung analog Beispiel 1 in Wasser zu lösen, jedoch wurden keine stabilen Lösungen erhalten. Die Ergebnisse sind in Tabelle 1 zusammengestellt.

**Tabelle 1: Löseversuche der längerkettigen Alkylglucamide in Wasser**

| Beispiel 2 Anteil an C_{12/14}-Glucamid in Gew.-% in Wasser | Beispiel 3 Anteil an C_{16/18}-Glucamid in Gew.-% in Wasser | Beobachtung |
|---|---|---|
| 60 | | Nicht löslich |
| 20 | | Löslich in der Wärme, bildet beim Abkühlen schnittfestes Gel |
| 10 | | Löslich in der Wärme, bildet beim Abkühlen schnittfestes Gel |
| | 60 | Nicht löslich |
| | 20 | Löslich in der Wärme, bildet beim Abkühlen schnittfestes Gel |
| | 10 | Löslich in der Wärme, bildet beim Abkühlen schnittfestes Gel |

Weil es nicht möglich war, stabile und handhabbare Lösungen des C_{12/14}-Glucamids herzustellen, wurde für die biologischen Tests und die Formulierungsversuche eine 20 Gew.-%ige Lösung in Propylenglykol hergestellt. Mit dem C_{16/18}-Glucamid war die Herstellung einer Propylenglykol-Lösung in der gleichen Konzentration nicht möglich.

### Beispiel 4: Biologische Wirksamkeit der Adjuvant-Zusammensetzungen

Zur Bestimmung der biologischen Wirksamkeit wurden Gewächshausversuche mit Glyphosat an *Echinochloa crus-galli* (L.) Beauv. (ECHCG), *Cirsium arvense* L. (CIRAR) und *Solanum nigrum* L. (SOLNI) durchgeführt. Die Pflanzen wurden in einem Gewächshaus unter 14 Stunden Lichtbestrahlung bei einer Temperatur von 19/14 (±0,5) °C (Tag/Nacht) und einer relativen Luftfeuchtigkeit von 70/80 (±5) % (Tag/Nacht) kultiviert. Das Licht wurde über Natrium-Hochdrucklampen, Quecksilber-Hochdrucklampen und fluoreszierende Röhren zugeführt, so dass sich eine Leistung von 70 W/m² auf dem Blattniveau ergibt. Die Pflanzen wurden in Töpfen aus Kunststoff mit 12 cm Durchmesser, gefüllt mit einer Mischung aus Sand und Humus im Volumenverhältnis Sand : Humus = 1 : 2, gezüchtet.

Die Töpfe wurden auf eine Unterbodenbewässerungsmatte platziert, die täglich mit einer mittelstarken Nährmittellösung befeuchtet wurde. Nach dem Erscheinen an der Substratoberfläche wurden Sprösslinge für die Wirksamkeitstests auf fünf (ECHCG), zwei (CIRAR), bzw. eine (SOLNI) Pflanze pro Topf ausgedünnt.

Die Sprühlösungen wurden mit einem Luftdruck betriebenen Laborsprüher mit einer Teejet TP8003E-Düse in einer Aufwandsmenge von 200 l/ha bei 303 kPa auf die Pflanzen appliziert. ECHCG wurde im Zwei- bis Dreiblattstadium, CIRAR und SOLNI wurden im Vierblatt-Stadium behandelt.

Zur differenzierteren Überprüfung der Adjuvant-Wirkung wurde der Wirkstoff Glyphosat unterdosiert, so dass es zu keinem vollständigen Abtöten der Pflanzen kommt. Dabei wurden wässrige Lösungen von Glyphosat-IsopropylammoniumSalz (Glyphosat IPA) eingesetzt. Die verwendete Glyphosatmenge lag bei 33,8 g a.e./ha Glyphosat IPA (entsprechend 1,0 mMol oder 0,17 g a.e./l bei einem Flüssigkeitsvolumen von 200 l/ha) bei ECHCG und bei 20,3 g a.e./ha Glyphosat IPA (entsprechend 0,6 mMol oder 0,10 g a.e./l bei einem Flüssigkeitsvolumen von 200 l/ha) bei CIRAR und SOLNI.

Der Adjuvant-Gehalt in den Sprühlösungen betrug jeweils 0,25 Gew.-%. Dabei wurden die unterschiedlichen Aktivgehalte der eingesetzten Produkte berücksichtigt. Die eingesetzten Mengen wurden korrigiert, d.h. die Angabe von 0,25 Gew.-% bezog sich in allen Fällen auf 100 % Aktivgehalt der Adjuvants und sind somit untereinander vergleichbar.

Eine Übersicht der getesteten Acylglucamide und Vergleichssubstanzen findet sich nachfolgend in Tabelle 2.

**Tabelle 2: Übersicht der verwendeten Adjuvants A1 bis A4**

| Adjuvant | Zusammensetzung |
|---|---|
| A1 (erfindungsgemäß) | C₈/C₁₀-Acyl-N-methylglucamid aus Beispiel 1, 54 Gew.-%ige Lösung in Wasser / Propylenglykol |
| A2 (Vergleich) | C₁₂/C₁₄-Acyl-N-methylglucamid aus Beispiel 2, 20 Gew.-%ige Lösung in Propylenglykol |
| A3 (Vergleich) | Genamin® 267 (Talgfettaminethoxylat mit 15 mol EO; Produkt der Firma Clariant), 70 Gew.-%ige Lösung in Glykolen |
| A4 (Vergleich) | Synergen® GL 5 (Copolymer bestehend aus Glycerin, Kokosfettsäure und Phthalsäure; Produkt der Firma Clariant), 70 Gew.-%ige Lösung in Wasser |

Die Wirksamkeit der unterschiedlichen Adjuvants wurde 14 Tage nach der Applikation durch Bestimmung der Masse der noch vorhandenen Pflanzenteile (fresh weight; FW) beurteilt und angegeben als Prozentanteil, bezogen auf die unbehandelte Pflanze, (Tabelle 3).

**Tabelle 3: Einfluss der Adjuvants auf die Wirksamkeit von Glyphosat IPA**

| | FW in % (ECHCG) | FW in % (CIRAR) | FW in % (SOLNI) |
|---|---|---|---|
| Unbehandelte Pflanze | 100 | 100 | 100 |
| Glyphosat IPA ohne Adjuvant | 74,3 | 95,9 | 84,5 |
| Glyphosat + A1 | 1,5 | 31,9 | 19,2 |
| Glyphosat + A2 | 42,9 | 62,2 | 29,7 |
| Glyphosat + A3 | 3,2 | 14,4 | 8,7 |
| Glyphosat + A4 | 4,0 | 33,0 | 40,9 |

Das Ergebnis der Versuche zeigt, dass die erfindungsgemäße Adjuvant-Zusammensetzung basierend auf dem C₈/C₁₀-Acyl-N-methylglucamid (siehe A1) deutlich wirksamer ist als die auf dem längerkettigen, nicht-erfindungsgemäßen C₁₂/C₁₄-Acyl-N-methylglucamid (siehe A2). Dabei wird eine vergleichbare (oder höhere) Wirksamkeit erzielt als mit den kommerziellen Produkten Genamin 267 (siehe A3) oder Synergen GL 5 (siehe A4).

### Beispiel 5: Wässrige Glyphosat-Zusammensetzungen

Zwei erfindungsgemäße Pestizid-Zusammensetzungen wurden aus einer handelsüblichen wässrigen Lösung von Glyphosat-Isopropylammoniumsalz (62 Gew.-%ig in Wasser), der Adjuvant-Zusammensetzung A1 und Wasser hergestellt. Die so erhaltenen Zusammensetzungen E1 und E2 enthalten 360 und 480 g/l Glyphosat a.e. (a.e.: acid equivalent).

Zum Vergleich dazu wurden jeweils zwei nicht-erfindungsgemäße Pestizid-Zusammensetzungen mit dem C₁₂/C₁₄-Acyl-N-methylglucamid (A2) sowie Genamin 267 (A3) und Synergen GL 5 (A4) hergestellt. Von den Zusammensetzungen wurden der Trübungspunkt und die Viskosität bestimmt.

Die Bestimmung des Trübungspunkts erfolgte durch Erhitzen der Zusammensetzung, die bis zum Auftreten einer Trübung erwärmt wurde. Im Anschluss daran wurde die Zusammensetzung unter Rühren und stetiger Temperaturkontrolle abkühlen gelassen. Die Temperatur, bei der die eingetrübte Lösung wieder aufklart, wurde als Messwert des Trübungspunkts dokumentiert.

Die Ergebnisse sind in den hier nachfolgenden Tabellen 4 und 5 dargestellt.

**Tabelle 4: Glyphosat-IPA 360 g/l a.e. Formulierungen**

| Zusammensetzung | | E1 (C₈/C₁₀-Acyl-N-methylGlucamid, A1) | V1 (C₁₂/C₁₄-Acyl-N-methylGlucamid, A2) | V2 (Genamin 267, A3) | V3 (Synergen GL 5, A4) |
|---|---|---|---|---|---|
| Glyphosat-IPA (62 Gew.-%ig in H₂O) | [g] | 78,4 | 78,4 | 78,4 | 104,4 |
| Adjuvant (tel.-quel.) | [g] | 12 | 18 | 12 | 12 |
| Adjuvant (berechnet auf 100 Gew.-%) | [g] | 6,5 | 3,8 | 8,4 | 8,4 |
| Wasser | [g] | 26,6 | 20,6 | 26,6 | 26,6 |
| Trübungspunkt | [°C] | > 95 | -- | 87 | 57 |
| Viskosität bei 25 °C | [mPa·s] | 25 | fest | 50 | 53 |

Mit dem nicht-erfindungsgemäßen C₁₂/C₁₄-Acyl-N-methylglucamid (A2) ließ sich keine stabile Glyphosat-Formulierung herstellen (Versuch V1), Es kam nur zur Bildung eines schnittfesten Gels. Von der Herstellung einer noch höher beladenen Glyphosat-Zusammensetzung (Versuch V4) wurde daher abgesehen.

**Tabelle 5: Glyphosat-IPA 480 g/l a.e. Formulierungen**

| Zusammensetzung | | E2 (C₈/C₁₀-Acyl-N-methylGlucamid, A1) | V4 (C₁₂/C₁₄-Acyl-N-methylGlucamid, A2) | V5 (Genamin 267, A3) | V6 (Synergen GL 5, A4) |
|---|---|---|---|---|---|
| Glyphosat-IPA (62 Gew.-%-ig in Wasser) | [g] | 104,4 | -- | 104,4 | 104,4 |
| Adjuvant (tel.-quel.) | [g] | 12 | -- | 12 | 12 |
| Adjuvant (berechnet auf 100 Gew.-%) | [g] | 6,5 | -- | 8,4 | 8,4 |
| Wasser | [g] | 3,6 | -- | 3,6 | 3,6 |
| Trübungspunkt | [°C] | > 95 | -- | trennt bei 25 °C | 64 |
| Viskosität bei 25°C | [mPa·s] | 95 | -- | -- | 205 |

Die Versuche machen deutlich, dass die erfindungsgemäße Adjuvant-Zusammensetzung (= A1) sowohl stabile 360 g/l a.e. als auch stabile 480 g/l a.e. Glyphosat-IPA Formulierungen ergab, die sich durch vorteilhaftere Anwendungseigenschaften, sprich höherer Trübungspunkt und gleichzeitig damit auch noch niedrigere Viskosität, im Vergleich zum nicht-erfindungsgemäßen C₁₂/C₁₄-Acyl-N-methylglucamid (A2) und zu den kommerziellen Produkten Genamin 267 (A3) und Synergen GL 5 (A4) auszeichnen.

### Beispiel 6: Wässrige 2,4-D-DMA-Zusammensetzungen

Eine erfindungsgemäße Pestizid-Zusammensetzung wurde aus 76,0 g wässriger 2,4-D-Dimethylammoniumsalz-Lösung (69 Gew.-%ig), 15,0 g Adjuvant-Zusammensetzung A1 und 14,5 g Wasser hergestellt. Die Formulierung hatte einen Aktivgehalt von 440 g/l a.e. (Säureäquivalent) bezogen auf 2,4-D. Die Phasenstabilität der Formulierung wurde durch Bestimmung des Trübungspunktes sowie der Kältestabilität bei 0 °C und -10 °C ermittelt. Die Formulierung zeigte einen Trübungspunkt von >95 °C und war nach Lagerung über eine Zeitdauer von 24 Stunden sowohl bei 0 °C als auch bei -10 °C homogen und phasenstabil.

### Beispiel 7: Wässrige Glyphosat-2,4-D-Zusammensetzungen

Erfindungsgemäße Glyphosat-2,4-D-Kombi-Formulierungen in drei (3) verschiedenen Mischungsverhältnissen (E3, E4 und E5) wurden aus wässrigen Lösungen von Glyphosat-Isopropylammoniumsalz (62 Gew.-%-ig), 2,4-D-Dimethylammoniumsalz (69 Gew.-%ig) und der Adjuvant-Zusammensetzung A1 hergestellt (siehe Tabelle 6).

Zum Vergleich dazu dienten jeweils drei nicht-erfindungsgemäße Zusammensetzungen, die Genamin 267 (V7, V8 und V9) und Synergen GL 5 (V10, V11 und V12) anstelle von A1 enthalten (Tabelle 6).

**Tabelle 6: Glyphosat-2,4-D-Kombi-Formulierungen**

| Versuch | Säureäquivalent (Glyphosat/ 2,4-D) | Glyphosat-IPA (62 Gew.-%ig in Wasser) | 2,4-D DMA (69 Gew.-%ig in Wasser) | Propylenglykol | Wasser | Adjuvant-Zusammensetzung (Menge) |
|---|---|---|---|---|---|---|
| | [g/l] | [g] | [g] | [g] | [g] | [g] |
| E3 | 300 + 100 | 35,6 | 9,5 | 4,5 | 6,4 | A1 (9,0) |
| E4 | 200 + 200 | 23,7 | 18,9 | 4,5 | 8,9 | A1 (9,0) |
| E5 | 100 + 300 | 11,9 | 28,6 | 0 | 15,5 | A1 (9,0) |
| V7 | 300 + 100 | 35,6 | 9,5 | 5,0 | 7,9 | A3 (7,0) |
| V8 | 200 + 200 | 23,7 | 18,9 | 5,0 | 10,4 | A3 (7,0) |
| V9 | 100 + 300 | 11,9 | 28,6 | 0 | 17,5 | A3 (7,0) |
| V10 | 300 + 100 | 35,6 | 9,5 | 5,0 | 7,9 | A4 (7,0) |
| V11 | 200 + 200 | 23,7 | 18,9 | 5,0 | 10,4 | A4 (7,0) |
| V12 | 100 + 300 | 11,9 | 28,6 | 0 | 17,5 | A4 (7,0) |

Von allen Formulierungen wurde die Phasenstabilität durch Bestimmung des Trübungspunktes sowie die Kältestabilität bei 0 °C und -10 °C ermittelt. Die Ergebnisse sind in der nachfolgenden Tabelle 7 dargestellt.

**Tabelle 7: Trübungspunkte und Kältestabilität der Zusammensetzungen**

| Versuch | Trübungspunkt [°C] | Aussehen bei 25 °C | Aussehen bei 0 °C | Aussehen bei -10 °C |
|---|---|---|---|---|
| E3 | > 95 | homogen | homogen | homogen |
| E4 | > 95 | homogen | homogen | homogen |
| E5 | > 95 | homogen | homogen | homogen |
| V7 | nicht bestimmt | trennt | trennt | trennt |
| V8 | nicht bestimmt | trennt | trennt | trennt |
| V9 | > 95 | homogen | homogen | homogen |
| V10 | > 95 | homogen | trennt | trennt |
| V11 | > 95 | homogen | homogen | trennt |
| V12 | > 95 | homogen | homogen | homogen |

Die Ergebnisse dieser Versuche zeigen, dass die erfindungsgemäßen Kombi-Formulierungen über einen breiteren Bereich deutlich stabiler waren als analoge Zusammensetzungen, die auf den kommerziellen Produkten Genamin 267 und Synergen GL 5 basieren.

## Patentansprüche

1. Wässrige Adjuvant-Zusammensetzung enthaltend
a) ein Gemisch aus Octanoyl-N-methylglucamid und Decanoyl-N-methylglucamid der Formel (I) 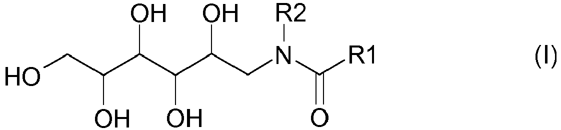 worin
R1 für C₇-Alkyl und C₉-Alkyl steht
R2 für eine Methylgruppe steht,
wobei der Anteil an Octanoyl-N-methylglucamid 10 bis 90 Gew.-% und der Anteil an Decanoyl-N-methylglucamid 10 bis 90 Gew.-%, bezogen auf die Gesamtmenge der in diesem Gemisch enthaltenen Alkylglucamide, beträgt
b) Wasser, und
c) optional ein Co-Solvens.

2. Adjuvant-Zusammensetzung nach Anspruch 1, **dadurch gekennzeichnet, dass** der Anteil an Octanoyl-N-methylglucamid 20 bis 80 Gew.-% und besonders bevorzugt 30 bis 70 Gew.-% und der Anteil an Decanoyl-N-methylglucamid 20 bis 80 Gew.-% und besonders bevorzugt 30 bis 70 Gew.-%, bezogen auf die Gesamtmenge der in diesem Gemisch enthaltenen Alkylglucamide, beträgt.

3. Adjuvant-Zusammensetzung nach einem oder mehreren der Ansprüche 1 bis 2, **dadurch gekennzeichnet, dass** der Anteil der mehreren Alkylglucamide a) 10 bis 90 Gew.-%, bevorzugt 20 bis 80 Gew.-% und besonders bevorzugt 30 bis 70 Gew.-%, bezogen auf das Gesamtgewicht der Zusammensetzung, beträgt.

4. Verwendung einer Adjuvant-Zusammensetzung enthaltend
a) ein oder mehrere Alkylglucamide der Formel (I) 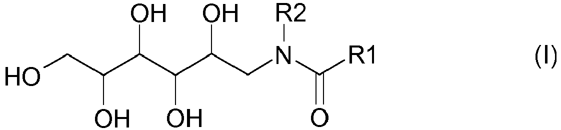 worin
R1 für eine lineare oder verzweigte Alkylgruppe mit 5 bis 9 Kohlenstoffatomen steht,
R2 für eine Alkylgruppe mit 1 bis 3 Kohlenstoffatomen steht,
b) Wasser, und
c) optional ein Co-Solvens,
zur Steigerung der biologischen Aktivität von Pestiziden ausgewählt aus der Gruppe der Herbizide, Fungizide, Akarizide, Bakterizide, Molluskizide, Nematizide und Rodentizide, vorzugsweise von Herbiziden.

5. Verwendung nach Anspruch 4, **dadurch gekennzeichnet, dass** in der Formel (I) R1 für eine lineare oder verzweigte Alkylgruppe mit 7 bis 9 Kohlenstoffatomen und R2 für eine Methylgruppe steht.

6. Verwendung nach Anspruch 4 oder 5, **dadurch gekennzeichnet, dass** es sich bei der Adjuvant-Zusammensetzung um eine Zusammensetzung nach einem oder mehreren der Ansprüche 1 bis 3 handelt.

7. Verwendung einer Adjuvant-Zusammensetzung enthaltend
a) ein oder mehrere Alkylglucamide der Formel (I) 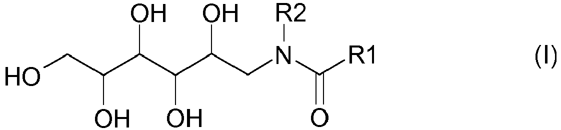 worin
R1 für eine lineare oder verzweigte Alkylgruppe mit 5 bis 9 Kohlenstoffatomen steht,
R2 für eine Alkylgruppe mit 1 bis 3 Kohlenstoffatomen steht,
b) Wasser, und
c) optional ein Co-Solvens,
zur Herstellung einer wässrigen Pestizidzusammensetzung.

8. Verwendung nach Anspruch 7, **dadurch gekennzeichnet, dass** in der Formel (I) R1 für eine lineare oder verzweigte Alkylgruppe mit 7 bis 9 Kohlenstoffatomen und R2 für eine Methylgruppe steht.

9. Verwendung nach Anspruch 7 oder 8, **dadurch gekennzeichnet, dass** es sich bei der Adjuvant-Zusammensetzung um eine Zusammensetzung nach einem oder mehreren der Ansprüche 1 bis 3 handelt.

10. Pestizid-Zusammensetzung enthaltend
a) ein oder mehrere Alkylglucamide der Formel (I) 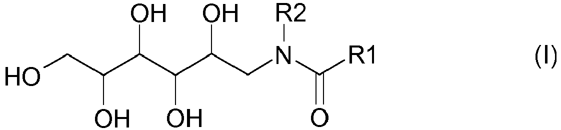 worin
R1 für eine lineare oder verzweigte Alkylgruppe mit 5 bis 9 Kohlenstoffatomen steht,
R2 für eine Alkylgruppe mit 1 bis 3 Kohlenstoffatomen steht,
b) Wasser
c) optional ein Co-Solvens, und
d) ein oder mehrere wasserlösliche Pestizide.

11. Pestizid-Zusammensetzung nach Anspruch 10, **dadurch gekennzeichnet, dass** in der Formel (I) R1 für eine lineare oder verzweigte Alkylgruppe mit 7 bis 9 Kohlenstoffatomen und R2 für eine Methylgruppe steht.

12. Pestizid-Zusammensetzung nach Anspruch 10 oder 11, **dadurch gekennzeichnet, dass** die ein oder mehreren Alkylglucamide der Formel (I) ein Gemisch nach einem oder mehreren der Ansprüche 1 und 2 darstellen.

13. Pestizid-Zusammensetzung nach einem oder mehreren der Ansprüche 10 bis 12, **dadurch gekennzeichnet, dass** das eine oder die mehreren wasserlöslichen Pestizide der Komponente d) ausgewählt sind aus der Gruppe der Herbizide, bevorzugt aus den wasserlöslichen Salzen von Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glufosinat, Glyphosat, Imizameth, Imazamethabenz, Imazamox, Imazapic, Imazapyr, Imazaquin, Imazethapyr, MCPA, MCPB, Mecoprop, Octansäure, Paraquat, Pelargonsäure, Picloram, Quizalofop, 2,3,6-TBA und Triclopyr.

14. Pestizid-Zusammensetzung nach einem oder mehreren der Ansprüche 10 bis 13, **dadurch gekennzeichnet, dass** das eine oder die mehreren wasserlöslichen Pestizide der Komponente d) ausgewählt sind aus wasserlöslichen Salzen von 2,4-D, Bentazon, Dicamba, Fomesafen, Glyphosat, Glufosinat, MCPA und Paraquat, bevorzugt aus den wasserlöslichen Salzen von Glyphosat.

15. Pestizid-Zusammensetzung nach einem oder mehreren der Ansprüche 10 bis 14, **dadurch gekennzeichnet, dass** die Zusammensetzung mindestens zwei wasserlösliche Pestizide der Komponente d) enthält.

16. Pestizid-Zusammensetzung nach Anspruch 15, **dadurch gekennzeichnet, dass** die wasserlöslichen Pestizide der Komponente d) ausgewählt sind aus Glyphosat, Glufosinat, 2,4-D, Dicamba und Fomesafen.

17. Pestizid-Zusammensetzung gemäß Anspruch 16, **dadurch gekennzeichnet dass** die wasserlöslichen Pestizide der Komponente d) Kombinationen der zwei Herbizide Glyphosat und 2,4-D bzw. Glyphosat und Dicamba bzw. Glyphosat und Fomesafen bzw. Glyfosat und Glufosinat bzw. 2,4-D und Dicamba bzw. Glufosinat und 2,4-D oder Glufosinat und Dicamba sind.

18. Pestizid-Zusammensetzung nach einem oder mehreren der Ansprüche 10 bis 17, **dadurch gekennzeichnet, dass** das die Gesamtmenge der Pestizide der Komponente d) in der Zusammensetzung größer als 100 g/l, bevorzugt größer als 200 g/l und besonders bevorzugt größer als 300 g/l, bezogen auf deren Säureäquivalent, beträgt.

19. Pestizid-Zusammensetzung nach einem oder mehreren der Ansprüche 10 bis 18, **dadurch gekennzeichnet, dass** die Gesamtmenge der Alkylglucamide der Formel (I) in der Zusammensetzung von 20 bis 250 g/l, bevorzugt von 40 bis 200 g/l und besonders bevorzugt von 50 bis 150 g/l beträgt.

20. Pestizid-Zusammensetzung nach einem oder mehreren der Ansprüche 10 bis 19, **dadurch gekennzeichnet, dass** sie bei einer Temperatur von größer 55 °C, bevorzugt von größer 70 °C und besonders bevorzugt von größer 80 °C, phasenstabil ist.

21. Pestizid-Zusammensetzung nach einem oder mehreren der Ansprüche 10 bis 20, **dadurch gekennzeichnet, dass** sie bei einer Temperatur von kleiner 10 °C, bevorzugt von kleiner 0 °C und besonders bevorzugt von kleiner -10 °C, phasenstabil ist.

22. Pestizid-Zusammensetzung nach einem oder mehreren der Ansprüche 10 bis 21, **dadurch gekennzeichnet, dass** sie ein oder mehrere agrochemische Salze, bevorzugt Ammoniumsalze, enthält.

23. Pestizid-Zusammensetzung nach einem oder mehreren der Ansprüche 10 bis 22, **dadurch gekennzeichnet, dass** die Zusammensetzung neben dem Alkylglucamid der Komponente a) ein oder mehrere weitere Adjuvants enthält.

24. Pestizid-Zusammensetzung nach einem oder mehreren der Ansprüche 10 bis 23, **dadurch gekennzeichnet, dass** das eine oder die mehreren Adjuvants ausgewählt sind aus der Gruppe der Fettaminethoxylate, Etheraminethoxylate, Alkylbetaine oder Amidoalkylbetaine, Aminoxide oder Amidoalkylaminoxide, Alkylpolylglycoside oder Copolymere aus Glycerin, Kokosfettsäure und Phthalsäure.

25. Pestizid-Zusammensetzung nach einem oder mehreren der Ansprüche 10 bis 24, **dadurch gekennzeichnet, dass** sie als Konzentrat-Formulierung vorliegt, die vor dem Gebrauch verdünnt wird und 5 bis 80 Gew.-%, bevorzugt 10 bis 70 Gew.-% und besonders bevorzugt 20 bis 60 Gew.-%, des einen oder der mehreren wasserlöslichen Pestizide der Komponente d) und 1 bis 25 Gew.-%, bevorzugt 2 bis 20 Gew.-% und besonders bevorzugt 3 bis 15 Gew.-%, der einen oder der mehreren Alkylglucamide der Komponente a) enthält.

26. Pestizid-Zusammensetzung nach einem oder mehreren der Ansprüche 10 bis 25, **dadurch gekennzeichnet, dass** sie als Spritzbrühe vorliegt und 0,001 bis 10 Gew.-%, bevorzugt 0,02 bis 3 Gew.-% und besonders bevorzugt 0,025 bis 2 Gew.-%, des einen oder der mehreren wasserlöslichen Pestizide der Komponente d) und 0,001 bis 3 Gew.-%, bevorzugt 0,005 bis 1 Gew.-% und besonders bevorzugt 0,01 bis 0,5 Gew.-%, der einen oder der mehreren Alkylglucamide der Komponente a) enthält.

27. Verwendung einer Pestizid-Zusammensetzung nach einem oder mehreren der Ansprüche 10 bis 26 zur Kontrolle und/oder zur Bekämpfung von Unkraut, Pilzerkrankungen oder Insektenbefall, vorzugsweise zur Kontrolle und/oder zur Bekämpfung von Unkraut, vorzugsweise im Tank-mix-Verfahren.

## Claims

1. An aqueous adjuvant composition comprising
a) a mixute of octanoyl-N-methylglucamide and decanoyl-N-methylglucamide of the formula (I) 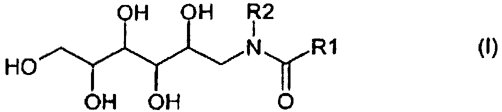 in which
R1 is C₇ alkyl and C₉ alkyl,
R2 is a methyl group,
where the fraction of octanoyl-N-methylglucamide is 10 to 90 wt% and the fraction of decanoyl-N-methylglucamide is 10 to 90 wt%, based on the total amount of alkylglucamides present in said mixture
b) water, and
c) optionally a cosolvent.

2. The adjuvant composition as claimed in claim 1, wherein the fraction of octanoyl-N-methylglucamide is 20 to 80 wt%, and more preferably 30 to 70 wt%, and the fraction of decanoyl-N-methylglucamide is 20 to 80 wt%, and more preferably 30 to 70 wt%, based on the total amount of alkylglucamides present in said mixture.

3. The adjuvant composition as claimed in one or more of claims 1 to 2, wherein the fraction of the plurality of alkylglucamides a) is 10 to 90 wt%, preferably 20 to 80 wt%, and more preferably 30 to 70 wt%, based on the total weight of the composition.

4. The use of an adjuvant composition comprising
a) one or more alkylglucamides of the formula (I) 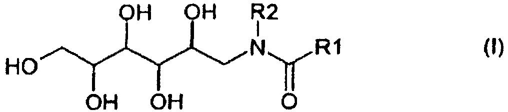 in which
R1 is a linear or branched alkyl group having 5 to 9 carbon atoms,
R2 is an alkyl group having 1 to 3 carbon atoms,
b) water, and
c) optionally a cosolvent, for boosting the biological activity of pesticides selected from the group of the herbicides, fungicides, acaricides, bactericides, molluscicides, nematicides, and rodenticides, preferably of herbicides.

5. The use as claimed in claim 4, wherein, in the formula (I), R1 is a linear or branched alkyl group having 7 to 9 carbon atoms, and R2 is a methyl group.

6. The use as claimed in claim 4 or 5, wherein the adjuvant composition is a composition as claimed in one or more of claims 1 to 3.

7. The use of an adjuvant composition comprising
a) one or more alkylglucamides of the formula (I) 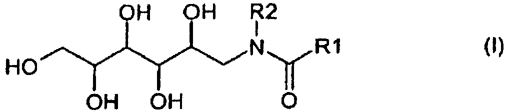 in which
R1 is a linear or branched alkyl group having 5 to 9 carbon atoms,
R2 is an alkyl group having 1 to 3 carbon atoms,
b) water, and
c) optionally a cosolvent, for producing an aqueous pesticide composition.

8. The use as claimed in claim 7, wherein, in the formula (I), R1 is a linear or branched alkyl group having 7 to 9 carbon atoms, and R2 is a methyl group.

9. The use as claimed in claim 7 or 8, wherein the adjuvant composition is a composition as claimed in one or more of claims 1 to 3.

10. A pesticide composition comprising
a) one or more alkylglucamides of the formula (I) 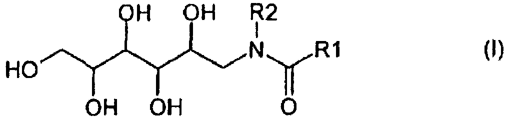 in which
R1 is a linear or branched alkyl group having 5 to 9 carbon atoms,
R2 is an alkyl group having 1 to 3 carbon atoms,
b) water
c) optionally a cosolvent, and
d) one or more water-soluble pesticides.

11. The pesticide composition as claimed in claim 10, wherein, in the formula (I), R1 is a linear or branched alkyl group having 7 to 9 carbon atoms, and R2 is a methyl group.

12. The pesticide composition as claimed in claim 10 or 11, wherein the one or more alkylglucamides of the formula (I) are a mixture as claimed in one or more of claims 1 and 2.

13. The pesticide composition as claimed in one or more of claims 10 to 12, wherein the one or more water-soluble pesticides of component d) are selected from the group of the herbicides, preferably from the water-soluble salts of acifluorfen, aminopyralid, amitrole, asulam, benazolin, bentazone, bialaphos, bispyribac, bromacil, bromoxynil, bicyclopyron, chloramben, clopyralid, 2,4-D, 2,4-DB, dicamba, dichlorprop, difenzoquat, diquat, endothal, fenoxaprop, flamprop, flumiclorac, fluoroglycofen, fomesafen, fosamine, glufosinate, glyphosate, imizameth, imazamethabenz, imazamox, imazapic, imazapyr, imazaquin, imazethapyr, MCPA, MCPB, mecoprop, octanoic acid, paraquat, pelargonic acid, picloram, quizalofop, 2,3,6-TBA, and triclopyr.

14. The pesticide composition as claimed in one or more of claims 10 to 13, wherein the one or more water-soluble pesticides of component d) are selected from water-soluble salts of 2,4-D, bentazone, dicamba, fomesafen, glyphosate, glufosinate, MCPA, and paraquat, preferably from the water-soluble salts of glyphosate.

15. The pesticide composition as claimed in one or more of claims 10 to 14, wherein the composition comprises at least two water-soluble pesticides of component d).

16. The pesticide composition as claimed in claim 15, wherein the water-soluble pesticides of component d) are selected from glyphosate, glufosinate, 2,4-D, dicamba, and fomesafen.

17. The pesticide composition as claimed in claim 16, wherein the water-soluble pesticides of component d) are combinations of the two herbicides glyphosate and 2,4-D or glyphosate and dicamba or glyphosate and fomesafen or glyfosate and glufosinate or 2,4-D and dicamba or glufosinate and 2,4-D or glufosinate and dicamba.

18. The pesticide composition as claimed in one or more of claims 10 to 17, wherein the total amount of the pesticides of component d) in the composition is greater than 100 g/l, preferably greater than 200 g/l, and more preferably greater than 300 g/l, based on their acid equivalent.

19. The pesticide composition as claimed in one or more of claims 10 to 18, wherein the total amount of the alkylglucamides of the formula (I) in the composition is from 20 to 250 g/l, preferably from 40 to 200 g/l, and more preferably from 50 to 150 g/l.

20. The pesticide composition as claimed in one or more of claims 10 to 19, which is phase-stable at a temperature of greater than 55°C, preferably of greater than 70°C, and more preferably of greater than 80°C.

21. The pesticide composition as claimed in one or more of claims 10 to 20, which is phase-stable at a temperature of less than 10°C, preferably of less than 0°C, and more preferably of less than - 10°C.

22. The pesticide composition as claimed in one or more of claims 10 to 21, which comprises one or more agrochemical salts, preferably ammonium salts.

23. The pesticide composition as claimed in one or more of claims 10 to 22, wherein the composition comprises one or more adjuvants further to the alkylglucamide of component a).

24. The pesticide composition as claimed in one or more of claims 10 to 23, wherein the one or more adjuvants are selected from the group of the fatty amine ethoxylates, ether amine ethoxylates, alkylbetaines or amidoalkylbetaines, amine oxides or amidoalkylamine oxides, alkylpolyglycosides, or copolymers of glycerol, coconut fatty acid, and phthalic acid.

25. The pesticide composition as claimed in one or more of claims 10 to 24, which is in the form of a concentrated formulation which is diluted prior to use and which comprises 5 to 80 wt%, preferably 10 to 70 wt%, and more preferably 20 to 60 wt% of the one or more water-soluble pesticides of component d) and 1 to 25 wt%, preferably 2 to 20 wt%, and very preferably 3 to 15 wt% of the one or more alkylglucamides of component a).

26. The pesticide composition as claimed in one or more of claims 10 to 25, which is in the form of a spray mixture and which comprises 0.001 to 10 wt%, preferably 0.02 to 3 wt%, and more preferably 0.025 to 2 wt% of the one or more water-soluble pesticides of component d) and 0.001 to 3 wt%, preferably 0.005 to 1 wt%, and very preferably 0.01 to 0.5 wt% of the one or more alkylglucamides of component a).

27. The use of a pesticide composition as claimed in one or more of claims 10 to 26 for checking and/or for controlling weeds, fungal diseases, or insect infestation, preferably for the checking and/or for the control of weeds, preferably by a tank-mix method.

## Revendications

1. Composition adjuvante aqueuse, contenant
a) un mélange d'octanoyl-N-méthylglucamide et de décanoyl-N-méthylglucamide de formule (I) 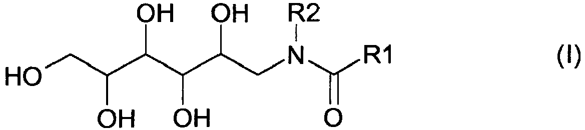 dans laquelle
R1 représente C₇-alkyle et C₉-alkyle
R2 représente un groupe méthyle,
la proportion d'octanoyl-N-méthylglucamide représentant 10 à 90% en poids et la proportion de décanoyl-N-méthylglucamide représentant 10 à 90% en poids, par rapport à la quantité totale des alkylglucamides contenus dans ce mélange,
b) de l'eau et
c) éventuellement un cosolvant.

2. Composition adjuvante selon la revendication 1, **caractérisée en ce que** la proportion d'octanoyl-N-méthylglucamide représente 20 à 80% en poids et de manière particulièrement préférée 30 à 70% en poids et la proportion de décanoyl-N-méthylglucamide représente 20 à 80% en poids et de manière particulièrement préférée 30 à 70% en poids, par rapport à la quantité totale des alkylglucamides contenus dans ce mélange.

3. Composition adjuvante selon l'une ou plusieurs des revendications 1 à 2, **caractérisée en ce que** la proportion des plusieurs alkylglucamides a) représente 10 à 90% en poids, de préférence 20 à 80% en poids et de manière particulièrement préférée 30 à 70% en poids, par rapport au poids total de la composition.

4. Utilisation d'une composition adjuvante contenant
a) un ou plusieurs alkylglucamides de formule (I) 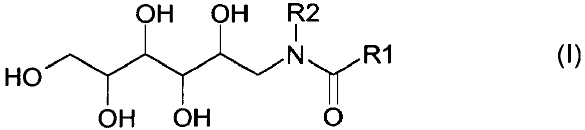 dans laquelle
R1 représente un groupe alkyle linéaire ou ramifié comprenant 5 à 9 atomes de carbone,
R2 représente un groupe alkyle comprenant 1 à 3 atomes de carbone,
b) de l'eau et
c) éventuellement un cosolvant, pour augmenter l'activité biologique de pesticides choisis dans le groupe des herbicides, des fongicides, des acaricides, des bactéricides, des molluscicides, des nématicides et des rodenticides, de préférence d'herbicides.

5. Utilisation selon la revendication 4, **caractérisée en ce que**, dans la formule (I), R1 représente un groupe alkyle linéaire ou ramifié comprenant 7 à 9 atomes de carbone et R2 représente un groupe méthyle.

6. Utilisation selon la revendication 4 ou 5, **caractérisée en ce qu'**il s'agit, pour la composition adjuvante, d'une composition selon l'une ou plusieurs des revendications 1 à 3.

7. Utilisation d'une composition adjuvante contenant
a) un ou plusieurs alkylglucamides de formule (I) 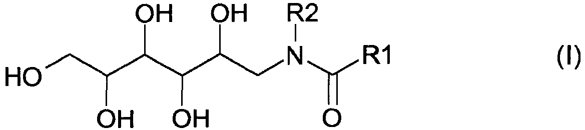 dans laquelle
R1 représente un groupe alkyle linéaire ou ramifié comprenant 5 à 9 atomes de carbone,
R2 représente un groupe alkyle comprenant 1 à 3 atomes de carbone,
b) de l'eau et
c) éventuellement un cosolvant, pour la préparation d'une composition pesticide aqueuse.

8. Utilisation selon la revendication 7, **caractérisée en ce que**, dans la formule (I), R1 représente un groupe alkyle linéaire ou ramifié comprenant 7 à 9 atomes de carbone et R2 représente un groupe méthyle.

9. Utilisation selon la revendication 7 ou 8, **caractérisée en ce qu'**il s'agit, pour la composition adjuvante, d'une composition selon l'une ou plusieurs des revendications 1 à 3.

10. Composition pesticide contenant
a) un ou plusieurs alkylglucamides de formule (I) 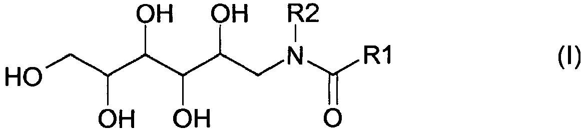 dans laquelle
R1 représente un groupe alkyle linéaire ou ramifié comprenant 5 à 9 atomes de carbone,
R2 représente un groupe alkyle comprenant 1 à 3 atomes de carbone,
b) de l'eau
c) éventuellement un cosolvant et
d) un ou plusieurs pesticides solubles dans l'eau.

11. Composition pesticide selon la revendication 10, **caractérisée en ce que**, dans la formule (I), R1 représente un groupe alkyle linéaire ou ramifié comprenant 7 à 9 atomes de carbone et R2 représente un groupe méthyle.

12. Composition pesticide selon la revendication 10 ou 11, **caractérisée en ce que** ledit un ou lesdits plusieurs alkylglucamides de formule (I) représentent un mélange selon l'une ou plusieurs des revendications 1 et 2.

13. Composition pesticide selon l'une ou plusieurs des revendications 10 à 12, **caractérisée en ce que** ledit un ou lesdits plusieurs pesticides solubles dans l'eau du composant d) sont choisis dans le groupe des herbicides, de préférence parmi les sels solubles dans l'eau de l'acifluorfène, de l'aminopyralide, de l'amitrole, de l'asulame, de la bénazoline, de la bentazone, du bialaphos, du bispyribac, du bromacil, du bromoxynil, de la bicyclopyrone, du chlorambène, du clopyralid, du 2,4-D, du 2,4-DB, du dicamba, du dichlorprop, du difenzoquat, du diquat, de l'endothall, du fenoxaprop, du flamprop, du flumiclorac, du fluoroglycofène, du fomesafen, de la fosamine, du glufosinate, du glyphosate, de l'imizameth, de l'imazaméthabenz, de l'imazamox, de l'imazapic, de l'imazapyre, de l'imazaquine, de l'imazéthapyre, du MCPA, du MCPB, du mécoprop, de l'acide octanoïque, du paraquat, de l'acide pélargonique, du picloram, du quizalofop, du 2,3,6-TBA et du triclopyr.

14. Composition pesticide selon l'une ou plusieurs des revendications 10 à 13, **caractérisée en ce que** ledit un ou lesdits plusieurs pesticides solubles dans l'eau du composant d) sont choisis parmi les sels solubles dans l'eau du 2,4-D, de la bentazone, du dicamba, du fomesafen, du glyphosate, du glufosinate, du MCPA et du paraquat, de préférence parmi les sels solubles dans l'eau du glyphosate.

15. Composition pesticide selon l'une ou plusieurs des revendications 10 à 14, **caractérisée en ce que** la composition contient au moins deux pesticides solubles dans l'eau du composant d).

16. Composition pesticide selon la revendication 15, **caractérisée en ce que** les pesticides solubles dans l'eau du composant d) sont choisis parmi le glyphosate, le glufosinate, le 2,4-D, le dicamba et le fomesafen.

17. Composition pesticide selon la revendication 16, **caractérisée en ce que** les pesticides solubles dans l'eau du composant d) sont des combinaisons des deux herbicides glyphosate et 2,4-D ou glyphosate et dicamba ou glyphosate et fomesafen ou glyphosate et glufosinate ou 2,4-D et dicamba ou glufosinate et 2,4-D ou glufosinate et dicamba.

18. Composition pesticide selon l'une ou plusieurs des revendications 10 à 17, **caractérisée en ce que** la quantité totale des pesticides du composant d) dans la composition est supérieure à 100 g/l, de préférence supérieure à 200 g/l et de manière particulièrement préférée supérieure à 300 g/l, par rapport à son équivalent d'acide.

19. Composition pesticide selon l'une ou plusieurs des revendications 10 à 18, **caractérisée en ce que** la quantité totale des alkylglucamides de formule (I) dans la composition est de 20 à 250 g/l, de préférence de 40 à 200 g/l et de manière particulièrement préférée de 50 à 150 g/l.

20. Composition pesticide selon l'une ou plusieurs des revendications 10 à 19, **caractérisée en ce qu'**elle présente des phases stables à une température supérieure à 55°C, de préférence supérieure à 70°C et de manière particulièrement préférée supérieure à 80°C.

21. Composition pesticide selon l'une ou plusieurs des revendications 10 à 20, **caractérisée en ce qu'**elle présente des phases stables à une température inférieure à 10°C, de préférence inférieure à 0°C et de manière particulièrement préférée inférieure à -10°C.

22. Composition pesticide selon l'une ou plusieurs des revendications 10 à 21, **caractérisée en ce qu'**elle contient un ou plusieurs sels agrochimiques, de préférence des sels d'ammonium.

23. Composition pesticide selon l'une ou plusieurs des revendications 10 à 22, **caractérisée en ce que** la composition contient, outre l'alkylglucamide du composant a), un ou plusieurs autres adjuvants.

24. Composition pesticide selon l'une ou plusieurs des revendications 10 à 23, **caractérisée en ce que** ledit un ou lesdits plusieurs adjuvants sont choisis dans le groupe des éthoxylates d'amines grasses, des éthoxylates d'étheramines, des alkylbétaïnes ou des amidoalkylbétaïnes, des oxydes d'amines ou des oxydes d'amidoalkylamine, des alkylpolyglycosides ou des copolymères de glycérol, d'acide gras de coco et d'acide phtalique.

25. Composition pesticide selon l'une ou plusieurs des revendications 10 à 24, **caractérisée en ce qu'**elle se trouve sous forme de formulation de concentrat qui est diluée avant l'utilisation et qui contient 5 à 80% en poids, de préférence 10 à 70% en poids et de manière particulièrement préférée 20 à 60% en poids dudit un ou desdits plusieurs pesticides solubles dans l'eau du composant d) et 1 à 25% en poids, de préférence 2 à 20% en poids et de manière particulièrement préférée 3 à 15% en poids dudit un ou desdits plusieurs alkylglucamides du composant a).

26. Composition pesticide selon l'une ou plusieurs des revendications 10 à 25, **caractérisée en ce qu'**elle se trouve sous forme de bouillon de pulvérisation et contient 0,001 à 10% en poids, de préférence 0,02 à 3% en poids et de manière particulièrement préférée 0,025 à 2% en poids dudit un ou desdits plusieurs pesticides solubles dans l'eau du composant d) et 0,001 à 3% en poids, de préférence 0,005 à 1% en poids et de manière particulièrement préférée 0,01 à 0,5% en poids dudit un ou desdits plusieurs alkylglucamides du composant a).

27. Utilisation d'une composition pesticide selon l'une ou plusieurs des revendications 10 à 26 pour réguler et/ou lutter contre les mauvaises herbes, les maladies fongiques ou l'attaque par les insectes, de préférence pour la régulation et/ou la lutte contre les mauvaises herbes, de préférence dans un procédé de mélange dans le réservoir.
